# EUROPEAN PATENT SPECIFICATION

(11) **EP 2 470 842 B1**
(45) Date of publication and mention of the grant of the patent: **21.02.2018**
(21) Application number: 10747704.4
(22) Date of filing: 26.08.2010
(51) Int. Cl.: F25B 30/02, F25D 23/00, F24H 4/04, F24D 3/08

(54) **HEAT TRANSPORT AND VENTILATION DEVICE, AND HEAT TRANSPORT AND VENTILATION SYSTEM**
WÄRMETRANSPORT- und VENTILATIONSVORRICHTUNG, und WÄRMETRANSPORT- und VENTILATIONSSYSTEM
DISPOSITIF ET SYSTÈME DE TRANSPORT DE CHALEUR ET VENTILATION

(30) Priority: 26.08.2009 NL 2003397
(43) Date of publication of application: 04.07.2012
(73) Proprietor: Inventum Beheer B.V., 3991 CS Houten (NL)
(72) Inventor: VAN NOORDENBURG, Frederik, Cornelis, Marianus, NL-3813 TC Amersfoort (NL)
(74) Representative: EP&C
(86) International application number: PCT/NL2010/050533
(87) International publication number: WO 2011/025374

(56) References cited:
- EP-A1- 1 906 107
- EP-A2- 1 018 627
- WO-A1-99/35449
- DE-A1-102006 020 506
- JP-A- 2005 172 384
- US-B1- 6 260 373

## Description

The invention relates to a heat transport system comprising:
- a compressor;
- an evaporator with a primary evaporator side and a secondary evaporator side for the extraction of heat from the primary evaporator side and the delivery of that heat to the secondary evaporator side;
- a condenser with a primary condenser side and a secondary condenser side for the extraction of heat from the primary condenser side and the delivery of that heat to the secondary condenser side; and
- a medium circuit,
wherein the secondary evaporator side and the primary condenser side are incorporated in the medium circuit, and wherein the compressor is incorporated in the medium circuit downstream of the evaporator.

Devices of this type are generally known for the transport of heat. An example of an application is the refrigerator, in which heat is transported from the refrigerator via the medium circuit to the air outside the refrigerator. Another heat transport device is known from patent document EP 1018627, describing a wall mounted heat pump including a sub-frame mounted compressor. Patent document EP 1906107 describes another wall mounted heat transport arrangement, while document US 6260373 discloses a heat transport and ventilation device according to the preamble of claim 1. An object of the invention is to provide an improved heat transport and ventilation device.

For this purpose, the invention provides, in a first aspect of the invention, for a heat transport and ventilation device according to claim 1. An advantage of a heat transport and ventilation device according to the first aspect of the invention is that vibrations from the compressor are thereby damped and can cause no or virtually no interfering noise or damage. Components other than the compressor can possibly be connected directly or indirectly to the attachment part, but may also be positioned on the subframe.

In a different embodiment, the heat transport device comprises a boiler which is disposed on the subframe. The boiler, which preferably has a content of 50L, adds a relatively large mass (certainly when filled with water) to the subframe, causing vibrations in the subframe to be damped already by the presence of the boiler.

In an embodiment, the heat transport and ventilation device comprises a housing, wherein the housing together with a subframe is to be detachably attached to the attachment part. This does not mean that the housing and the subframe are per se permanently connected to one another, but merely that the housing and the subframe are to be simultaneously detachably attached to the attachment part. The arranging of the subframe in the housing relates only to the location of the subframe in relation to the housing. In an embodiment, the housing can also be attached to the attachment part separately from the subframe. A resilient arranging of the subframe in the housing indicates that possible direct contact between the subframe and the housing takes place on the attachment part side of the resilient elements with which the subframe is arranged in relation to the attachment part. In other words, the housing and the subframe are each arranged directly on the attachment part. The advantage of this is that the forces from the subframe do not have to be directed first through the housing in the direction of the attachment part, as a result of which vibrations occur in the housing and may be amplified. The forces are then directly absorbed on the attachment part, resulting in a substantial noise reduction.

The housing can serve to protect components of the heat transport and ventilation device, but can also be used to suspend or attach other components of the device on or to it. The housing is preferably soundproof. Even more preferably, the housing is made of metal to provide effective soundproofing characteristics.

The facility for detachable positioning of the housing with the subframe provides for an easy-to-install system. Firstly, the attachment part can simply be attached to a wall or ceiling, whereafter the rest of the heat transport device can be detachably arranged.

Connections between components on the subframe and components attached to the housing are preferably flexibly implemented.

The detachable attachment of the housing and the subframe to the attachment part is preferably implemented by means of a hook-type and/or pin connection. The attachment part can thereby be attached to the wall or ceiling and thereafter the heat transport device can be suspended in a simple manner on the attachment part and can also be removed again later for maintenance or repair. The housing is preferably arranged on the hook-type connection and/or mortise and tenon joint so that there is as little contact as possible between the housing and the subframe, as a result of which vibrations in the subframe have little to no impact on the housing.

In an embodiment, the subframe is resiliently arranged on the attachment part by means of vibration dampers which are preferably arranged on the attachment part close to the detachable connection of the subframe and the housing. As a result, it can be effectively ensured for the support of the subframe that, due to the presence of the boiler, a relatively large mass can be present in comparison with the rest of the heat transport device.

In an embodiment, at least one vertically positioned vibration damper is provided which is designed to take the weight of the subframe and the components arranged thereon on the attachment part, and at least one horizontally positioned vibration damper is provided which is designed to absorb horizontal forces on the attachment part. The vertically positioned vibration dampers are preferably designed as pressure-spring elements. The vertically positioned vibration damper is preferably positioned under the subframe. The attachment part then preferably comprises a protruding part which is also positioned under the subframe. This creates a vertical stacking of the protruding part of the attachment part, the spring element and the subframe. This provides effective support for the subframe.

An advantage of a heat transport and ventilation device according to the invention is that the device is suitable for the extraction of residual heat from a medium and can deliver this residual heat to a water circuit, as a result of which hot water is produced which can be usefully employed in a home as heating by means of a central heating or floor heating system, or in the form of hot (drinking) water for a shower, bath, kitchen, etc. The water circuit then forms, for example, part of a central heating system and/or a floor heating system and/or a hot water system. The heat transport and ventilation device comprises a displacement apparatus for the transportation of a medium through the primary evaporator side.

The medium is air, the displacement apparatus is preferably a fan. The advantage of a fan is that the heat transport and ventilation device can also serve as a ventilation device while residual heat can simultaneously be extracted from the ventilation air. As a result, a separate ventilation system does not need to be provided and heat which would otherwise dissipate with the ventilation air from the area is recovered.

The water circuit which is connectable to the heat transport and ventilation device comprises a central heating installation, and/or may comprise a hot water device such as a boiler, wherein the boiler may form part of the heat transport device, as will be described in further detail below.

In a different embodiment, the heat transport and ventilation device comprises a three-way valve with one inlet and two outlets, wherein the three-way valve is controllable in order to distribute a flow through the inlet between the two outlets, and wherein the three-way valve is connected via its inlet to the water outlet of the secondary condenser side and is connectable via its two outlets to two branches of the water circuit.

An advantage of the three-way valve, i.e. the facility for connecting the device to two branches of the water circuit, is that the residual heat can usefully be employed for two different purposes, wherein the distribution of the residual heat, i.e. the heat transport between the two purposes, can be controlled by the three-way valve.

In a different embodiment, the heat transport and ventilation device comprises a boiler with a boiler reservoir for water for domestic use, such as, for example, the provision of hot water for a shower, bath, and kitchen.

According to another aspect of the invention, the invention provides for a heat transport and ventilation device according to claim 1, further characterized in that the heat transport device comprises a three-way valve with one inlet and two outlets, wherein the three-way valve is controllable in order to distribute a flow through the inlet between the two outlets, and wherein the three-way valve is connected via its inlet to the water outlet of the secondary condenser side and is connectable via its two outlets to two branches of the water circuit, and in that the heat transport device comprises a boiler with a boiler reservoir for water for domestic use, wherein the boiler comprises a heat exchanger with a primary boiler side and a secondary boiler side for the extraction of heat from the primary boiler side and the delivery of that heat to the secondary boiler side, wherein an inlet of the primary broiler side is in liquid communication with an outlet of the three-way valve and an outlet of the primary boiler side is in liquid communication with the water inlet of the secondary condenser side for the formation of a first branch of the water circuit, and wherein the secondary boiler side is in liquid communication with the boiler reservoir.

An advantage of the heat transport and ventilation device according to this aspect of the invention is that water in the boiler is indirectly heated up via the first branch of the water circuit. A possible leak in the condenser cannot therefore contaminate the water in the boiler, but will contaminate the water in the water circuit, wherein the water in the water circuit is preferably not used as drinking water.

In another aspect of the invention, the invention provides for a heat transport and ventilation device according to claim 1, further characterized in that the heat transport and ventilation device comprises a boiler with a boiler reservoir for water for domestic use, wherein the boiler comprises a boiler condenser with a primary boiler condenser side and a secondary boiler condenser side for the extraction of heat from the primary boiler condenser side and the delivery of that heat to the secondary boiler condenser side, wherein the primary boiler condenser side is incorporated in the medium circuit, and wherein the secondary boiler condenser side is in liquid communication with the boiler reservoir.

An advantage of the heat transport and ventilation device according to this aspect of the invention is that heating up of the boiler water takes place separately from the heating up of the water in the water circuit.

The connectable water circuit will, certainly in the case where it comprises a central heating installation or floor heating installation, be able to be used to heat an area. Air will then be transported from the area along the primary evaporator side, possibly by a fan. The water circuit can then be controlled on the basis of the temperature of the air, thereby providing for an automatic temperature control of the area. By providing a temperature sensor in the inlet opening, the heat transport device which is connected to the water circuit can influence the latter on the basis of an output of the temperature sensor. This can be done via a controller which can intervene in different ways. Thus, a possibly present three-way valve, circulation pump or compressor of the heat transport device can be controlled by the controller.

The temperature sensor and controller may be designed as a thermostat.

The invention also relates to a heat transport and ventilation system comprising:
- a heat transport or ventilation device according to one of the claims 2 - 8, and
- a second heat transport device arranged in at least one of the two branches of the water circuit to heat the water in the at least one of the two branches of the water circuit with the aid of fossil fuels or electricity.

An advantage of a heat transport system according to the invention is that the second heat transport device can provide assistance if the heat transport device is not able to meet the energy requirement. The second heat transport device is preferably a high-efficiency boiler or a high-efficiency combination boiler.

In an embodiment, the heat transport and ventilation device and the second heat transport device are incorporated in parallel with one another in a central heating water circuit.

In a different embodiment, the heat transport and ventilation device and the second heat transport device are incorporated in series with one another in a central heating water circuit.

In a further different embodiment, the heat transport and ventilation device comprises a boiler which is incorporated in series with a hot water device of the second heat transport device in a hot water supply circuit.

It must be noted that, where possible, different aspects of the invention can be combined with one another and can also be used in a heat transport and ventilation system according to the invention.

In particular, some aspects can be combined in order to restrict the interfering noise from the heat transport device to a minimum. This can possibly be combined with the measure to fill an area around the compressor with soundproofing material.

The invention will now be described in a non-limiting manner with reference to a drawing, in which:
Fig. 1 shows a heat transport and ventilation device according to one embodiment of the invention;
Fig. 2 shows a heat transport and ventilation device according to a different embodiment of the invention;
Fig. 3 shows a heat transport and ventilation device according to one embodiment of the invention;
Fig. 4 shows in detail a part of a heat transport and ventilation device according to one embodiment of the invention in a non-assembled condition; and
Fig. 5 shows in detail the part shown in Fig. 4 in an assembled condition.

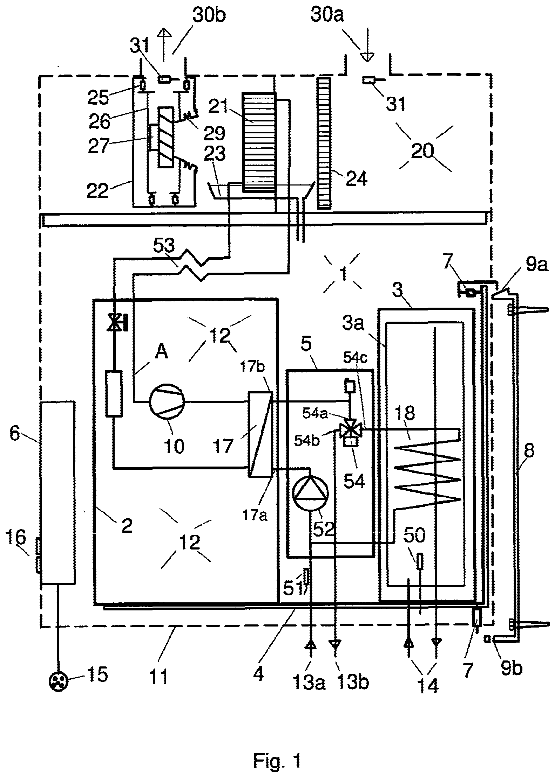

Fig. 1 shows a heat transport and ventilation device according to one embodiment of the invention. The heat transport and ventilation device comprises a compressor 10, an evaporator 21, a condenser 17 and a medium circuit A.

The condenser 21 has a primary evaporator side and a secondary evaporator side for the extraction of heat from the primary evaporator side and the delivery of that heat to the secondary evaporator side, wherein the secondary evaporator side is incorporated in the medium circuit A.

The condenser 17 has a primary condenser side and a secondary condenser side for the extraction of heat from the primary condenser side and the delivery of that heat to the secondary condenser side, wherein the primary condenser side is incorporated in the medium circuit A.

The compressor 10 is incorporated in the medium circuit downstream of the evaporator.

The secondary condenser side has a water inlet 17a and a water outlet 17b which are connectable to a water circuit.

The evaporator 21 is arranged in an area 20 whose walls form a connection piece between a first opening 30a and a second opening 30b. The compressor 10, the condenser 17 and the largest part of the medium circuit A are arranged in an area 1 which is preferably thermally isolated from the area 20.

The primary evaporator side is connected to the area 20. A displacement apparatus in the form of a fan 27 is arranged between the evaporator and the second opening 30b for the displacement/transportation of a medium, in this case air, through the primary evaporator side.

In this embodiment, the fan 27 is attached to a subframe 26 which is resiliently suspended on a detachable housing 22 by means of vibration dampers 25. A flexible area inlet 29 is also provided which ensures an air seal between the housing 22 and the subframe 26. The advantage of the resilient incorporation of the fan is that vibrations are damped and cannot cause any noise overload or damage. The flexible air inlet 29 contributes here also.

By being detachable, the housing and therefore the fan can be arranged as required between the evaporator and the second opening as shown in Fig. 1, but also between the evaporator and the first opening. The air stream can thus be directed in a simple manner as required from the first opening to the second opening or vice versa, as a result of which the installation and connections to the openings can be simply arranged without having to make complicated bends in connections.

In the area 20, a filter 24 is arranged between the evaporator and the first opening to filter the air which flows through the primary evaporator side. The filter 24 is preferably designed as a grease filter.

The assembly of the compressor 10, evaporator 21, condenser 17 and medium circuit A forms a heat pump, wherein heat can be extracted from the air which flows through the primary evaporator side and can be delivered to water that is transported through the secondary condenser side. Given that the operating principle of a heat pump of this type is already known, it will not be examined here in further detail.

If heat is extracted in the primary evaporator side, moisture from the air may possibly condense. The heat transport device therefore comprises a condensate collection vessel 23 which can remove the condensate in the direction of a drain or other type of removal means (not shown further in Fig. 1).

The heat transport and ventilation device comprises a three-way valve 54 with one inlet 54a and two outlets 54b, 54c, wherein the three-way valve is controllable in order to distribute a flow through the inlet 54a between the two outlets, and wherein the three-way valve is connected via its inlet 54a to the water outlet 17b of the secondary condenser side and is connectable via its two outlets to two branches of the water circuit.

The heat transport and ventilation device comprises a boiler 3 with a boiler reservoir 3a for water for domestic use. The boiler reservoir 3a is connectable to a hot water supply circuit by means of water connections 14. The boiler comprises a heat exchanger 18 with a primary boiler side and a secondary boiler side for the extraction of heat from the primary boiler side and the delivery of that heat to the secondary boiler side, wherein an inlet of the primary boiler side is in liquid communication with the outlet 54c of the three-way valve 54 and an outlet of the primary boiler side is in liquid communication with the water inlet 17a of the secondary condenser side to form a first branch of the water circuit. The secondary boiler side is in liquid communication with the boiler reservoir.

A circulation pump 52 is arranged between the heat exchanger 18 and the water inlet 17a to circulate the water through the first branch of the water circuit.

The outlet 54b of the three-way valve is connectable to a second branch of the water circuit by means of the connection 13b, for example to a water supply of a central heating installation or floor heating installation. The water return pipe of the central heating installation is then connectable to the connection 13a. The first and second branch are interconnected for the circulation pump 52, so that the pump can also be used to circulate water in the second branch of the water circuit.

The heat exchanger 18 is preferably designed as a spiral-shaped pipe.

In this example, the three-way valve and the circulation pump are arranged in a separate housing 5, similar to the compressor 10 and condenser 17, which are placed in a separate housing 2. This offers the advantage that the heat transport device can be designed with a modular structure, thereby simplifying the manufacture. The area 12 in the housing 2 is preferably filled with a soundproofing material such as, for example, pulp. Vibrations from the compressor are thereby already damped at the point of origin.

The heat transport and ventilation device further comprises a controller 6 incorporated in the energy supply for energy-consuming components such as, for example, the compressor, fan, and circulation pump. The controller 6 is connectable for this purpose to an energy source such as the mains supply via the connector 15.

The heat transport and ventilation device also comprises four temperature sensors 31, 50, 51 which are connected to the controller. Temperature sensors 31 are arranged in the first and second opening 30a, 30b and can be used to measure the temperature in the area from which air is extracted and thus to determine the energy requirement of the area. On the basis of an output of this sensor 31, a controller can control the quantity of heat which the water circuit (in this case the second branch of the water circuit) delivers to the area. In this example, the controller will preferably set the three-way valve for this purpose. The sensor and controller may be designed as a thermostat to control the temperature in the area. The temperature sensors 31 are arranged for this purpose in both openings so that both the first and second opening can be used as an inlet opening by the detachable fan. On the basis of an output of both temperature sensors 31, the controller can determine which opening is used as an inlet opening and can therefore control the heat emission in the area independently of the installation on the basis of an output of the temperature sensor in the opening which is used as an inlet opening.

In this example, the temperature sensor 50 is placed in the boiler reservoir 3a and measures the temperature of the water in the boiler, and the temperature sensor 51 measures the temperature of the water returning from the second branch of the water circuit, for example via the return pipe of a central heating installation. On the basis of the measured temperatures of the sensors 50 and 51, the controller can operate the three-way valve 54 and can therefore determine the distribution between the two outputs 54b and 54c. The controller preferably distributes the flow between the outputs in such a way that the branch of the water circuit with the lowest associated temperature receives the greatest part of the flow. This offers the advantage that the temperature rise for the heat pump is as low as possible, which improves efficiency.

The controller 6 can be operated by the operating panel 16. Thus, for example, the size of the area which is connected to the inlet opening can be entered, as a result of which the controller 6 automatically sets the fan to the required value.

The housing 2 with a part of the water pump, the housing 5 with the three-way valve and the circulation pump and boiler 3 are arranged on a subframe 4. The subframe 4 is resiliently arranged in relation to the housing 11 to which the remaining components of the device are attached.

The heat transport and ventilation device further comprises an attachment part 8 which serves here to attach the heat transport device to a wall (not shown). The housing 11 and therefore also the subframe 4 are detachably arranged onto the attachment part by means of a hook fastening 9a and a mortise and tenon joint 9b. Vibrations caused by the compressor 10 will then be damped, particularly by the mass of the boiler 3 and by the vibration dampers 7 between the subframe 4 and the attachment part, and interfering noise and damage will be restricted to a minimum.

In this embodiment, the housing 11 is connected to the hook fastening 9a. However, this connection is not essential. The hook fastening 9a can also be used to place only the subframe 4 on the attachment part 8, wherein the housing 11 is attached separately to the attachment part 8. As a result, the housing 11 will make minimal contact with the hook fastening and the subframe in order to minimise vibrations transmitted from the subframe to the housing.

The resilient element 7 in the mortise and tenon joint 9b protrudes beyond the housing 11 so that it can make contact with the attachment part 8. No contact is preferably made here between the housing 11 and the resilient element 7.

Due to the design of the resilient elements 7, the resilient element 7 in the mortise and tenon joint 9b transfers in particular the vertical forces, i.e. the weight, from the subframe to the attachment part 8 and the resilient element 7 in the hook fastening 9a transfers in particular the horizontal forces, thereby preventing the subframe from rotating around the mortise and tenon joint 9b.

Given that a large part of the mass of the heat transport and ventilation device will be present on the subframe, the latter is designed as an L-frame, wherein the vibration dampers 7 are positioned as close as possible to the hook fastening and the mortise and tenon joint, thereby ensuring an effective transfer of the weight on the subframe onto the attachment part 8.

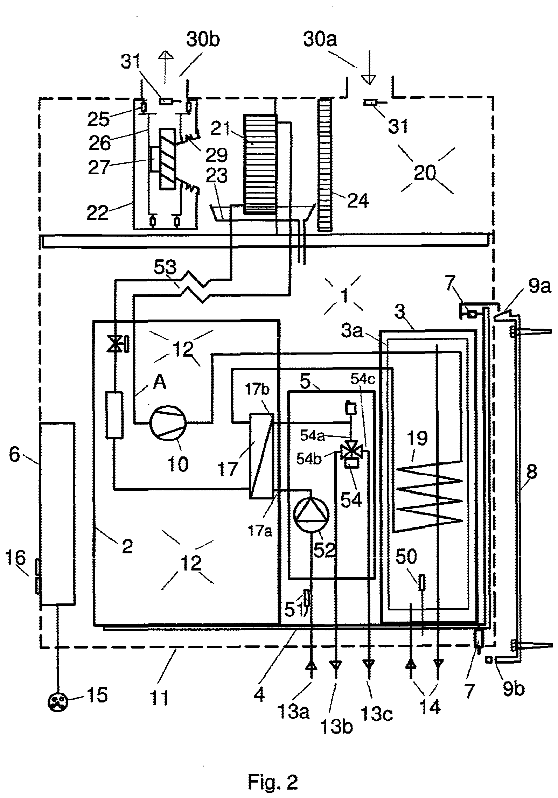

Fig. 2 shows a heat transport and ventilation device according to a different embodiment of the invention. Corresponding components are identically numbered and a discussion of their operation and function can be found in the corresponding description of Fig. 1. The differences between the embodiment shown in Fig. 2 and the embodiment shown in Fig. 1 will be explained in detail below.

Fig. 2 shows a boiler 3 with a boiler reservoir 3a for water for domestic use. The water in the boiler reservoir 3a is warmed up during operation by the boiler condenser 19, which has a primary boiler condenser side and a secondary boiler condenser side for the extraction of heat from the primary boiler condenser side and the delivery of that heat to the secondary boiler condenser side, wherein the primary boiler condenser side is incorporated in the medium circuit A. The secondary boiler condenser side is in liquid communication with the boiler reservoir. In this example, the primary boiler condenser side is incorporated in the medium circuit in series with the primary condenser side of the condenser.

On both outlets 54b, 54c of the three-way valve, water connections 13b and 13c are respectively provided here for connection to two branches of a water circuit, for example for connection to two water supply pipes of separate central heating installations, or one central heating installation and one floor heating installation, or even to a first branch to heat an external boiler comparable with Fig. 1 and a second branch. A connection 13a is provided for connection to a water return pipe which returns water from both branches. In a different embodiment, two separate connections could be provided by means of a T-junction respectively for water return pipes, which converge internally in the heat transport device at the T-junction and are thus connected to the water inlet 17a of the condenser.

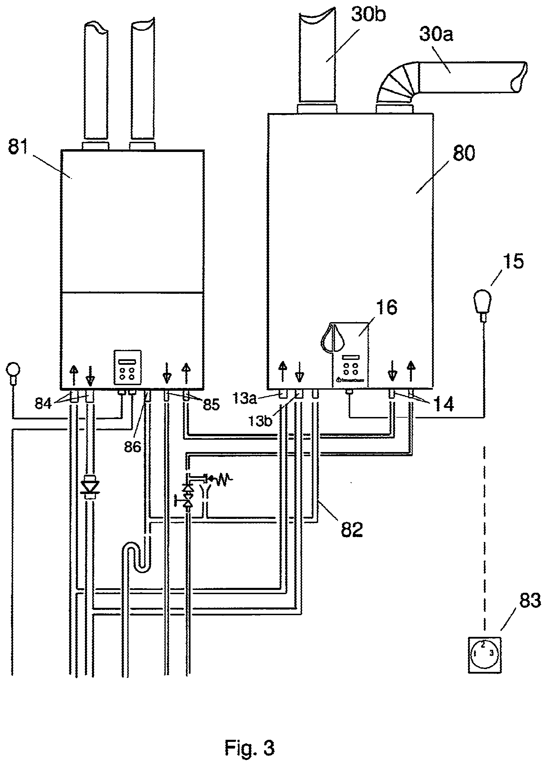

Fig. 3 shows a heat transport and ventilation system according to one embodiment of the invention. The heat transport and ventilation system comprises a heat transport and ventilation device 80 according to one embodiment of the invention, and, in particular, according to an embodiment comparable with the embodiment shown in Fig. 1, wherein the heat transport and ventilation device comprises connections 14 for the connection of a boiler reservoir to a hot water supply circuit and connections 13a, 13b for connection to a second branch of a water circuit.

The system furthermore comprises air pipes 30 (shown) which are connected to an inlet opening and an outlet opening of the heat transport and ventilation device 80 to supply air from an area (not shown) and to remove this air, mostly to the outside. The pipes 30 make it possible to position the heat transport device at a distance from an area to be ventilated.

The heat transport and ventilation device 80 further comprises an operating panel 16 which forms part of a controller and can receive its energy via the connector 15. The fan may also possibly be operated separately via an externally arranged switch 83. This switch may be located, for example, in the area to be ventilated.

A pipe 82 which can remove condensate is connected to the heat transport and ventilation device 80. This condensate may form in the evaporator and can be efficiently removed in this way.

The heat transport and ventilation system also comprises a second heat transport device 81, in particular a high-efficiency combination boiler. The high-efficiency combination boiler 81 is a combination boiler of a known type and comprises a hot water device with connections 85 and connections 84 for connection to a central heating installation. The boiler of the heat transport and ventilation device 80 is connected in series with the hot water device of the combination boiler 81. The heat transport and ventilation device 80 and the combination boiler 81 are connected in parallel with one another to the central heating installation. The condensate removal pipe 82 of the heat transport device is also connected to the condensate removal connection 86 of the combination boiler. This simplifies the pipe-work. The combination boiler is designed to heat water with fossil fuels such as gas and fuel oil and can possibly also heat using electricity from the electricity mains supply. In principle, the energy requirement is met by the heat transport and ventilation device 80. However, if the heat transport and ventilation device 80 cannot meet the total energy requirement, for example due to a peak demand, the second heat transport device 81 can also be connected to meet the remaining energy requirement.

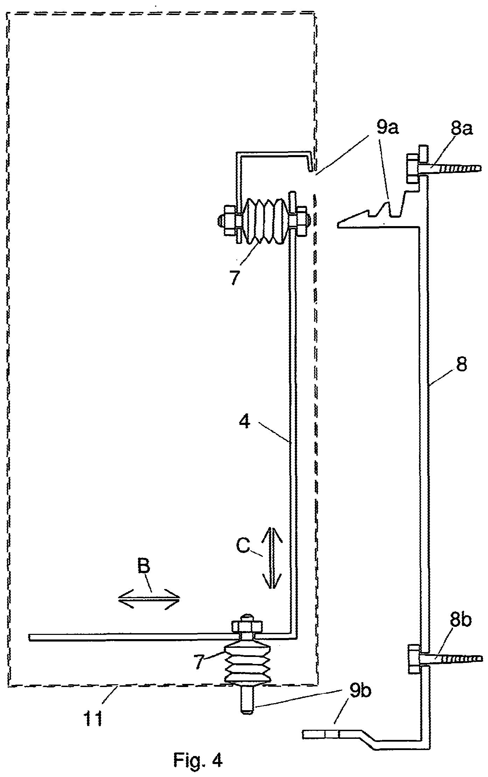

Fig. 4 shows in detail how the heat transport and ventilation device according to the invention can be attached to a wall. For this purpose, the heat transport and ventilation device comprises a housing 11, a subframe 4, and an attachment part 8.

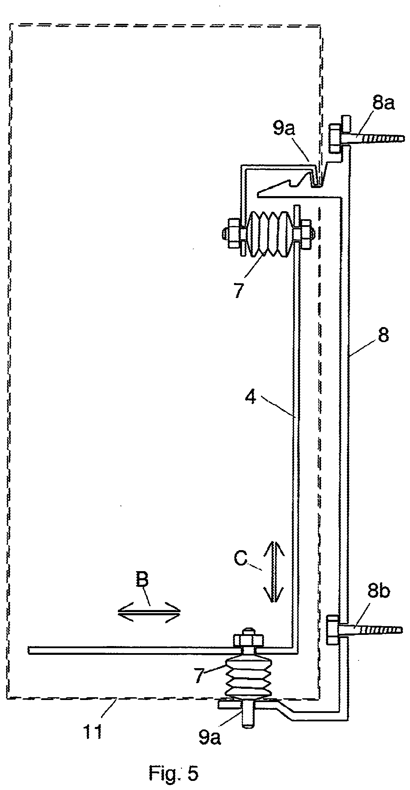

The attachment part 8 is attached to a wall by means of screws or bolts 8a and 8b. As no substantial weight of the device is yet attached, this can be simply implemented. The heat transport device can then be detachably placed on the attachment part by means of a hook fastening 9a and a mortise and tenon joint 9b (see Fig. 5).

Vibration dampers 7, to which the L-shaped subframe 4 is attached, are arranged close to the hook fastening 9a and the mortise and tenon joint 9b. The weight on the subframe can thereby be effectively transferred to the attachment part.

The vibration dampers 7 shown here have a spring device positioned at right angles to a spring device of the other vibration damper 7, wherein vibrations can be damped at least in the directions B and C.

Fig. 4 and Fig. 5 show two vibration dampers, but it is easily possible to fit a plurality of vibration dampers. Similarly, it is possible to provide a plurality of hook fastenings and mortise and tenon joints. The chosen permutation depends on the weight and the extent of vibrations expected.

As shown in Figures 4 and 5, the subframe is connected to the attachment part 8 by means of a hook 9a and a mortise and tenon joint 9b. The housing 11 is permanently connected in each case to the hook 9a, but, in the case of the mortise and tenon joint, may not be connected to the tenon, but may sit evenly on the attachment means. The advantage of this configuration is that the contact between the housing and the subframe is minimal, as a result of which vibrations cannot be effectively transferred. Similarly, most of the weight will have to be borne by the subframe and not by the housing, as a result of which a robust connection between the subframe and the attachment means is of greater value than a robust connection between the housing and the attachment means.

In an embodiment, the housing 11 may also be loosely arranged in relation to the hook fastening 9a, wherein the contact between the subframe 4 and the housing 11 is even further minimised. The housing 11 is then attached in parallel with the subframe to the attachment part 8. The housing may possibly be temporarily fixed to the subframe, for example for transportation, as a result of which the housing and the subframe can be positioned as one whole unit on the attachment part. After positioning, the temporary fixed connection can be removed so that the contact between the subframe and the housing is then minimal.

## Claims

1. Heat transport and ventilation device comprising:
- a compressor (10);
- an evaporator (21) with a primary evaporator side and a secondary evaporator side for the extraction of heat from the primary evaporator side and the delivery of that heat to the secondary evaporator side;
- a displacement apparatus (27) for the transportation of air through the primary evaporator side,
- a condenser (17) with a primary condenser side and a secondary condenser side for the extraction of heat on the primary condenser side and the delivery of that heat on the secondary condenser side; and
- a medium circuit (A), wherein the secondary evaporator side and the primary condenser side are incorporated in the medium circuit (A), and wherein the compressor (10) is incorporated in the medium circuit (A) downstream of the evaporator (21), wherein the secondary condenser side has a water inlet (17a) and a water outlet (17b) which are connectable to a water circuit forming part of a central heating system and/or a floor heating system,
and wherein the heat transport and ventilation device is designed to deliver heat to an area via the water circuit,
**characterized in that** the heat transport and ventilation device comprises an attachment part (8) to attach the heat transport and ventilation device to a wall or ceiling, and a subframe (4), wherein the subframe (4) is resiliently arranged in relation to the attachment part (8) and wherein the compressor (10) is arranged onto the subframe (4), **in that** the primary evaporator side is arranged in a connection piece between an inlet opening (30a) and an outlet opening (30b), said inlet opening (30a) being connected to the area and said outlet opening (30b) being connected to outside the area, and **in that** the device comprises a temperature sensor (31) and a controller (6), said temperature sensor (31) being arranged in the inlet opening (30a) to measure the temperature, and said controller (6) being designed to determine the energy requirement of the area and to control the quantity of heat delivered to the area on the basis of an output of the temperature sensor (31).

2. Heat transport and ventilation device according to claim 1, comprising a three-way valve (54) with one inlet (54a) and two outlets (54b,54c), wherein the three-way valve (54) is controllable in order to distribute a flow through the inlet (54a) between the two outlets (54b,54c), and wherein the three-way valve (54) is connected via its inlet (54a) to the water outlet (17b) of the secondary condenser side and is connectable via its two outlets (54b,54c) to two branches of the water circuit.

3. Heat transport and ventilation device according to claim 1 or 2, comprising a boiler (3) with a boiler reservoir (3a) for water for domestic use.

4. Heat transport and ventilating device according to claim 3, wherein the boiler (3) is arranged onto the subframe (4).

5. Heat transport and ventilation device according to claims 2 and 3, wherein the boiler (3) comprises a heat exchanger (18) with a primary boiler side and a secondary boiler side for the extraction of heat from the primary boiler side and the delivery of that heat to the secondary boiler side, wherein an inlet of the primary boiler side is in liquid communication with an outlet (54c) of the three-way valve (54) and an outlet of the primary boiler side is in liquid communication with the water inlet (17a) of the secondary condenser side to form a first branch of the water circuit, and wherein the secondary boiler side is in liquid communication with the boiler reservoir (3a).

6. Heat transport and ventilation device according to claim 5, comprising a temperature sensor (50) in the boiler reservoir (3a) or in the first branch of the water circuit to measure the temperature of the water in the boiler reservoir (3a) or the first branch of the water circuit respectively, a temperature sensor (51) in the second branch of the water circuit to measure the temperature of the water in the second branch of the water circuit, and a controller (6) designed to control the three-way valve (54) on the basis of an output of the temperature sensors (50,51), wherein the controller (6) sets the three-way valve (54) in such a way that most of the flow through the inlet (54a) of the three-way valve (54) passes to the branch of the water circuit which has the lowest associated temperature.

7. Heat transport and ventilation device according to claim 3, wherein the boiler (3) comprises a boiler condenser (19) with a primary boiler condenser side and a secondary boiler condenser side for the extraction of heat from the primary boiler condenser side and the delivery of that heat to the secondary boiler condenser side, wherein the primary boiler condenser side is incorporated in the medium circuit (A), and wherein the secondary boiler condenser side is in liquid communication with the boiler reservoir (3a).

8. Heat transport and ventilation device according to claim 7, comprising two temperature sensors (50,51) to measure the temperature of the water in the first branch and the second branch of the water circuit, and a controller (6) designed to control the three-way valve (54) on the basis of an output of the temperature sensors (50,51), wherein the controller (6) sets the three-way valve (54) in such a way that most of the flow through the inlet (54a) of the three-way valve (54) passes to the branch of the water circuit which has the lowest associated temperature.

9. Heat transport and ventilation system comprising:
- a heat transport and ventilation device (80) according to one of the preceding claims 2 to 8, and
- a second heat transport device (81) arranged in at least one of the two branches of the water circuit to heat the water in the at least one of the two branches of the water circuit with the aid of fossil fuels or electricity.

10. Heat transport and ventilation system according to claim 9, wherein the heat transport and ventilation device (80) and the second heat transport device (81) are incorporated in parallel with one another in a central heating water circuit.

11. Heat transport and ventilation system according to claim 9, wherein the heat transport and ventilation device (80) and the second heat transport device (81) are incorporated in series with one another in a central heating water circuit.

12. Heat transport and ventilation system according to one of the claims 9 to 11, wherein the heat transport and ventilation system comprises a boiler (3) which is incorporated in series with a hot water device of the second heat transport device (81) in a hot water supply circuit.

## Patentansprüche

1. Wärmetransport- und Ventilationsvorrichtung, umfassend:
- einen Kompressor (10);
- einen Verdampfer (21) mit einer primären Verdampferseite und einer sekundären Verdampferseite für die Extraktion von Wärme aus der primären Verdampferseite und die Lieferung dieser Wärme an die sekundäre Verdampferseite;
- einen Verdrängungsapparat (27) für den Transport von Luft durch die primäre Verdampferseite,
- einen Kondensator (17) mit einer primären Kondensatorseite und einer sekundären Kondensatorseite für die Extraktion von Wärme an der primären Kondensatorseite und die Lieferung dieser Wärme an die sekundäre Kondensatorseite; und
- einen Mediumkreislauf (A),
wobei die sekundäre Verdampferseite und die primäre Kondensatorseite in den Mediumkreislauf (A) eingebaut sind und wobei der Kompressor (10) dem Verdampfer (21) nachgeschaltet in den Mediumkreislauf (A) eingebaut ist,
wobei die sekundäre Kondensatorseite einen Wassereinlass (17a) und einen Wasserauslass (17b) aufweist, die mit einem Wasserkreislauf, der einen Teil von einem Zentralheizsystem und/oder einem Bodenheizsystem bildet, verbindbar sind, und
wobei die Wärmetransport- und Ventilationsvorrichtung gestaltet ist, um über den Wasserkreislauf Wärme an einen Bereich zu liefern,
**dadurch gekennzeichnet, dass** die Wärmetransport- und Ventilationsvorrichtung einen Befestigungsteil (8), um die Wärmetransport- und Ventilationsvorrichtung an einer Wand oder Decke zu befestigen, und einen Hilfsrahmen (4) umfasst, wobei der Hilfsrahmen (4) in Bezug auf den Befestigungsteil (8) elastisch angeordnet ist und wobei der Kompressor (10) auf dem Hilfsrahmen (4) angeordnet ist,
dass die primäre Verdampferseite in einem Verbindungsstück zwischen einer Einlassöffnung (30a) und einer Auslassöffnung (30b) angeordnet ist, wobei die Einlassöffnung (30a) mit dem Bereich verbunden ist und wobei die Auslassöffnung (30b) mit außerhalb des Bereich verbunden ist, und dass die Vorrichtung einen Temperatursensor (31) und eine Steuervorrichtung (6) umfasst, wobei der Temperatursensor (31) in der Einlassöffnung (30a) angeordnet ist, um die Temperatur zu messen, und die Steuervorrichtung (6) gestaltet ist, um den Energiebedarf des Bereichs zu bestimmen und die Wärmemenge, die an den Bereich geliefert wird, auf der Basis von einer Ausgabe des Temperatursensors (31) zu steuern.

2. Wärmetransport- und Ventilationsvorrichtung nach Anspruch 1, umfassend ein Dreiwegeventil (54) mit einem Einlass (54a) und zwei Auslässen (54b, 54c), wobei das Dreiwegeventil (54) steuerbar ist, um einen Fluss durch den Einlass (54a) zwischen den zwei Aus- lässen (54b, 54c) aufzuteilen und wobei das Dreiwegeventil (54) über seinen Einlass (54a) mit dem Wasserauslass (17b) der sekundären Kondensatorseite und über seine zwei Auslässe (54b, 54c) mit zwei Verzweigungen des Wasserkreislaufes verbindbar ist.

3. Wärmetransport- und Ventilationsvorrichtung nach Anspruch 1 oder 2, umfassend einen Boiler (3) mit einem Boilerreservoir (3a) für Wasser für den Hausgebrauch.

4. Wärmetransport- und Ventilationsvorrichtung nach Anspruch 3, wobei der Boiler (3) auf dem Hilfsrahmen (4) angeordnet ist.

5. Wärmetransport- und Ventilationsvorrichtung nach Anspruch 2 oder 3, wobei der Boiler (3) einen Wärmetauscher (18) mit einer primären Boilerseite und einer sekundären Boilerseite für die Extraktion von Wärme aus der primären Boilerseite und die Lieferung dieser Wärme an die sekundäre Boilerseite umfasst, wobei ein Einlass von der primären Boilerseite in Flüssigkeitskommunikation mit einem Auslass (54c) von dem Dreiwegeventil (54) steht und ein Auslass von der primären Boilerseite in Flüssigkeitskommunikation mit dem Wassereinlass (17a) von der sekundären Kondensatorseite steht, um eine erste Verzweigung von dem Wasserkreislauf zu bilden, und wobei die sekundäre Boilerseite in Flüssigkeitskommunikation mit dem Boilerreservoir (3a) steht.

6. Wärmetransport- und Ventilationsvorrichtung nach Anspruch 5, umfassend einen Temperatursensor (50) in dem Boilerreservoir (3a) oder in der ersten Verzweigung des Wasserkreislaufs, um die Temperatur von dem Wasser in dem Boilerreservoir (3a) beziehungsweise der ersten Verzweigung des Wasserkreislaufs zu messen,
einen Temperatursensor (51) in der zweiten Verzweigung des Wasserkreislaufs, um die Temperatur von dem Wasser in der zweiten Verzweigung des Wasserkreislaufs zu messen, und
eine Steuervorrichtung (6), die gestaltet ist, um das Dreiwegeventil (54) auf der Basis von einer Ausgabe der Temperatursensoren (50, 51) zu steuern, wobei die Steuervorrichtung (6) das Dreiwegeventil (54) so einstellt, dass der größte Teil von dem Fluss durch den Einlass (54a) des Dreiwegeventils (54) die Verzweigung des Wasserkreislaufs erreicht, welche die niedrigste assoziierte Temperatur aufweist.

7. Wärmetransport- und Ventilationsvorrichtung nach Anspruch 3, wobei der Boiler (3) einen Boilerkondensator (19) mit einer primären Boilerkondensator-seite und einer sekundären Boilerkondensatorseite für die Extraktion von Wärme aus der primären Boilerkondensatorseite und die Lieferung dieser Wärme an die sekundäre Boilerkondensatorseite umfasst, wobei die primäre Boilerkondensatorseite in den Mediumkreislauf (A) eingebaut ist und wobei die sekundäre Boilerkondensatorseite in Flüssigkeitskommunikation mit dem Boilerreservoir (3a) steht.

8. Wärmetransport- und Ventilationsvorrichtung nach Anspruch 7, umfassend zwei Temperatursensoren (50, 51), um die Temperatur von dem Wasser in der ersten Verzweigung und der zweiten Verzweigung des Wasserkreislaufs zu messen, und eine Steuervorrichtung (6), die gestaltet ist, um das Dreiwegeventil (54) auf der Basis von einer Ausgabe der Temperatursensoren (50, 51) zu steuern, wobei die Steuervorrichtung (6) das Dreiwegeventil (54) so einstellt, dass der größte Teil von dem Fluss durch den Einlass (54a) des Dreiwegeventils (54) die Verzweigung des Wasserkreislaufs erreicht, welche die niedrigste assoziierte Temperatur aufweist.

9. Wärmetransport- und Ventilationssystem, umfassend:
- eine Wärmetransport- und Ventilationsvorrichtung (80) nach einem der vorhergehenden Ansprüche 2 bis 8, und
- eine zweite Wärmetransportvorrichtung (81), die in mindestens einer von den zwei Verzweigungen des Wasserkreislaufs angeordnet ist, um das Wasser in der mindestens einen von den zwei Verzweigungen des Wasserkreislaufes mit Hilfe von fossilen Brennstoffen oder Elektrizität zu erwärmen.

10. Wärmetransport- und Ventilationssystem nach Anspruch 9, wobei die Wärmetransport- und Ventilationsvorrichtung (80) und die zweite Wärmetransportvorrichtung (81) in einem Zentralheizungswasserkreislauf parallel zueinander eingebaut sind.

11. Wärmetransport- und Ventilationssystem nach Anspruch 9, wobei die Wärmetransport- und Ventilationsvorrichtung (80) und die zweite Wärmetransportvorrichtung (81) in einem Zentralheizungswasserkreislauf in Serie zueinander eingebaut sind.

12. Wärmetransport- und Ventilationssystem nach einem der Ansprüche 9 bis 11, wobei das Wärmetransport- und Ventilationssystem einen Boiler (3) umfasst, der in einem Heißwasserversorgungskreislauf in Serie mit einer Heißwasservorrichtung der zweiten Wärmetransportvorrichtung (81) eingebaut ist.

## Revendications

1. Dispositif de transport de chaleur et de ventilation comprenant:
- un compresseur (10);
- un évaporateur (21) avec un côté primaire de l'évaporateur et un côté secondaire de l'évaporateur pour l'extraction de chaleur du côté primaire de l'évaporateur et la distribution de cette chaleur vers le côté secondaire de l'évaporateur ;
- un appareillage de déplacement (27) pour le transport d'air à travers le côté primaire de l'évaporateur ;
- un condenseur (17) avec un côté primaire du condenseur et un côté secondaire du condenseur pour l'extraction de chaleur du côté primaire du condenseur et la distribution de cette chaleur vers le côté secondaire du condenseur ; et
- un circuit (A) de milieu,
dans lequel le côté secondaire de l'évaporateur et le côté primaire du condenseur sont incorporés dans le circuit (A) de milieu, et dans lequel le compresseur (10) est incorporé dans le circuit (A) de milieu en aval de l'évaporateur (21),
dans lequel le côté secondaire du condenseur a une entrée (17a) d'eau et une sortie (17b) d'eau qui peuvent être connectées à un circuit d'eau faisant partie d'un système de chauffage central et/ou de chauffage par le sol,
et dans lequel le dispositif de transport de chaleur et de ventilation est conçu pour distribuer de la chaleur dans une zone par l'intermédiaire du circuit d'eau,
**caractérisé en ce que** le dispositif de transport de chaleur et de ventilation comprend une partie (8) de fixation pour fixer le dispositif de transport de chaleur et de ventilation à un mur ou un plafond, et un sous-châssis (4),
dans lequel le sous-châssis (4) est disposé de manière élastique vis-à-vis de la partie de fixation (8) et dans lequel le compresseur (10) est agencé sur le sous-châssis (4),
**en ce que** le côté primaire de l'évaporateur est agencé dans une pièce de connexion entre une ouverture d'entrée (30a) et une ouverture de sortie (30b), ladite ouverture d'entrée (30a) étant connectée à la zone et ladite ouverture de sortie (30b) étant connectée à l'extérieure de la zone, et
**en ce que** le dispositif comprend un capteur (31) de température et un contrôleur (6), ledit capteur (31) de température étant agencé dans l'ouverture d'entrée (30a) pour mesurer la température, et ledit contrôleur (6) étant conçu pour déterminer les besoins en énergie de la zone et pour contrôler la quantité de chaleur distribuée à la zone à partir d'une sortie du capteur (31) de température.

2. Dispositif de transport de chaleur et de ventilation selon la revendication 1, comprenant une vanne (54) à trois voies avec une entrée (54a) et deux sorties (54b, 54c), dans lequel la vanne (54) à trois voies peut être commandée pour distribuer un flux à travers l'entrée (54a) entre les deux sorties (54b, 54c), et dans lequel la vanne (54) à trois voies est connectée à travers son entrée (54a) à la sortie (17b) d'eau du côté secondaire du condenseur et est connectable à travers ses deux sorties (54b, 54c) à deux branches du circuit d'eau.

3. Dispositif de transport de chaleur et de ventilation selon la revendication 1 ou la revendication 2, comprenant une chaudière (3a) avec un réservoir (3a) de chaudière pour de l'eau à usage domestique.

4. Dispositif de transport de chaleur et de ventilation selon la revendication 3, dans lequel la chaudière (3) est arrangée sur le sous-châssis (4).

5. Dispositif de transport de chaleur et de ventilation selon les revendications 2 et 3, dans lequel la chaudière (3) comprend un échangeur de chaleur (18) avec un côté primaire de la chaudière et un côté secondaire de la chaudière pour l'extraction de chaleur du côté primaire de la chaudière et la distribution de cette chaleur vers le côté secondaire de la chaudière, dans lequel une entrée du côté primaire de la chaudière est en communication liquide avec une sortie (54c) de la vanne (54) à trois voies et une sortie du côté primaire de la chaudière est en communication liquide avec l'entrée (17a) d'eau du côté secondaire du condenseur pour former une première branche du circuit d'eau, et dans lequel le côté secondaire de la chaudière est en communication liquide avec le réservoir (3a) de la chaudière.

6. Dispositif de transport de chaleur et de ventilation selon la revendication 5, comprenant un capteur (50) de température dans le réservoir (3a) de la chaudière ou dans la première branche du circuit d'eau pour mesurer, respectivement, la température de l'eau dans le réservoir (3a) de la chaudière ou dans la première branche du circuit d'eau, un capteur (51) de température dans la seconde branche du circuit d'eau pour mesurer la température de l'eau dans la seconde branche du circuit d'eau, et un contrôleur (6) conçu pour commander la vanne (54) à trois voies sur la base d'une sortie des capteurs (50, 51) de température, dans lequel le contrôleur (6) règle la vanne (54) à trois voies de telle sorte que la plus grande partie de l'écoulement à travers l'entrée (54a) de la vanne (54) à trois voies passe dans la branche du circuit d'eau qui a la température associée la plus basse.

7. Dispositif de transport de chaleur et de ventilation selon la revendication 3, dans lequel la chaudière (3) comprend un condenseur (19) de chaudière avec un côté primaire du condenseur de la chaudière et un côté secondaire du condenseur de la chaudière pour l'extraction de chaleur du côté primaire du condenseur de la chaudière et la distribution de cette chaleur vers le côté secondaire du condenseur de la chaudière, dans lequel le côté primaire du condenseur de la chaudière est incorporé dans le circuit (A) du milieu, et le côté secondaire du condenseur de la chaudière est en communication liquide avec le réservoir (3a) de la chaudière.

8. Dispositif de transport de chaleur et de ventilation selon la revendication 7, comprenant deux capteurs (50, 51) de température pour mesurer la température de l'eau dans la première branche et la seconde branche du circuit d'eau, et un contrôleur (6) conçu pour commander la vanne (54) à trois voies sur la base d'une sortie des capteurs (50, 51) de température, dans lequel le contrôleur (6) règle la vanne (54) à trois voies de telle sorte que la plus grande partie de l'écoulement à travers l'entrée (54a) de la vanne (54) à trois voies passe dans la branche du circuit d'eau qui a la température associée la plus basse.

9. Système de transport de chaleur et de ventilation comprenant:
- un dispositif (80) de transport de chaleur et de ventilation selon l'une des revendications précédentes 2 à 8, et
- un second dispositif (81) de transport de chaleur disposé dans au moins l'une des deux branches du circuit d'eau pour chauffer l'eau dans l'au moins une des deux branches du circuit d'eau à l'aide de combustibles fossiles ou d'électricité.

10. Système de transport de chaleur et de ventilation selon la revendication 9, dans lequel le dispositif (80) de transport de chaleur et de ventilation et le second dispositif (81) de transport de chaleur sont incorporés en parallèle l'un de l'autre dans un circuit d'eau de chauffage central.

11. Système de transport de chaleur et de ventilation selon la revendication 9, dans lequel le dispositif (80) de transport de chaleur et de ventilation et le second dispositif (81) de transport de chaleur sont incorporés en série l'un avec l'autre dans un circuit d'eau de chauffage central.

12. Système de transport de chaleur et de ventilation selon l'une des revendications 9 à 11, dans lequel le système de transport de chaleur et de ventilation comprend une chaudière (3) qui est incorporée en série avec un dispositif d'eau chaude du second dispositif (81) de transport de chaleur dans un circuit d'alimentation en eau chaude.
